# EUROPEAN PATENT APPLICATION

(11) **EP 2 397 217 A1**
(43) Date of publication of application: **21.12.2011**
(21) Application number: 10741215.7
(22) Date of filing: 09.02.2010
(51) Int. Cl.: B01D 71/36, B01D 61/14, B01D 69/12

(54) **POROUS MULTILAYER FILTER AND METHOD FOR PRODUCING SAME**

(30) Priority: 16.02.2009 JP 2009032987
(71) Applicant: Sumitomo Electric Fine Polymer, Inc., Sennan-gun, Osaka 590-0458 (JP)
(72) Inventor: UNO Atsushi, Sennan-gun Osaka 590-0458 (JP); FUNATSU Hajime, Sennan-gun Osaka 590-0458 (JP); TSUJIWAKI Hiroyuki, Sennan-gun Osaka 590-0458 (JP)
(74) Representative: Setna, Rohan P.
(86) International application number: PCT/JP2010/051847
(87) International publication number: WO 2010/092938

(57) **Abstract**

Provided is a porous multilayer filter which can trap ultrafine particles and in which permeability is high and treatment can be performed at a high flow rate. A porous multilayer filter is **characterized by** including a support layer 2 composed of a porous expanded PTFE sheet, and a filtration layer 3 composed of a porous expanded PTFE sheet which is different from that of the support layer 2, wherein at least a liquid-to-be-treated inflow surface of the filtration layer 3 is subjected to hydrophilization treatment, the filtration layer 3 and the support layer 2 are fusion-bonded to each other at a boundary therebetween to form a multilayer structure, pores of the support layer 2 three-dimensionally communicate with pores of the filtration layer 3, and pores surrounded by a fibril skeleton of the filtration layer 3 are smaller than pores of the support layer 2.

## Description

### Technical Field

The present invention relates to a porous multilayer filter, and more particularly, relates to a filter for microfiltration capable of filtering ultrafine particles at a high flow rate.

### Background Art

Polytetrafluoroethylene (hereinafter, referred to as "PTFE") porous filters have characteristics inherent in PTFE, such as high heat resistance, chemical stability, weatherability, noncombustibility, high strength, non-adhesiveness, and a low coefficient of friction, as well as characteristics possessed by porous bodies, such as flexibility, liquid permeability, particle retention efficiency, and a low dielectric constant, and have been conventionally used in a variety of fields, such as in liquid/gas filters for microfiltration (membrane filters), wire coating materials, and breather valves (air vents).

In recent years, because of excellent characteristics, such as high chemical stability, PTFE porous filters have been widely used, in particular, as filters for filtration of chemical solutions, gases, and the like in the semiconductor-related field, liquid crystal-related field, and food/medicine-related field.
In such fields, in view of further technological innovation and increasing requirements, there have been demands for filters for microfiltration having higher performance. Specifically, in semiconductor manufacturing, the degree of integration is increasing year by year, thus reducing the photoresist line width to a range of 0.5 µm or less. Similarly, in liquid crystal manufacturing, microfabrication using photosensitive materials is performed, and therefore, there is a need for filters for microfiltration which can reliably trap fine particles in smaller regions. These filters for microfiltration are mainly used as filters for treating air in clean rooms and as filters for filtration of chemical solutions, and their performance affects the yield of products.
Furthermore, in the food/medicine-related yield, along with recent increases in safety awareness, there have been strong demands for completeness of filtration (absolute removability) for very small pieces of foreign matter.

However, when filters with small pore sizes are used in order to secure high particle retention efficiency, permeability, i.e., the treatment rate for chemical solutions or air, decreases, resulting in a decrease in productivity of products. In a currently commercially available PTFE porous membrane having fine pores with a pore size of 0.02 µm, the flow rate of isopropyl alcohol (IPA) is 0.0005 ml/cm²/min at a differential pressure of 0.95 kg/cm², and almost no permeability is obtained. Thus, in the conventional filters for microfiltration, it is very difficult to balance the treatment rate and particle retention efficiency.

Various PTFE porous bodies have been proposed in response to the problem described above.
For example, Japanese Unexamined Patent Application Publication No. 2003-80590 (PTL 1) proposes a porous body produced by a method in which PTFE fine powder or a shaped body formed by extrusion thereof is irradiated with radiation before being stretched so that the porous body can have high filtration performance while maintaining the same permeability.
However, in the porous body of PTL 1, a radiation irradiation step is essential, thus increasing costs, which is a problem.

Furthermore, Japanese Unexamined Patent Application Publication No. 7-316327 (PTL 2) provides a PTFE porous body which is capable of removing particles having a particle size of 0.109 µm with a particle retention ratio of 90% or more and which has a porosity of 60% to 90% and an IPA flow rate of 0.6 ml/cm²/min or more as measured under a pressure drop of 1 kg/cm².
Although the PTFE porous body of PTL 2 is excellent in terms of high particle retention ratio, there is still room for improvement in terms of permeability. That is, the IPA flow rate is 0.6 ml/cm²/min or more, and even the highest IPA flow rate among the examples in PTL 2 is 1.8 ml/cm²/min. Therefore, a considerable time is required for filtration.
As described above, it is difficult to obtain a filter which has both a high particle retention ratio and permeability.

Furthermore, since PTFE porous bodies are hydrophobic, water does not easily permeate into the porous bodies, which is a problem. Therefore, for the purpose of easily providing filtering in an aqueous system, a porous membrane having a hydrophilic coating film formed thereon is provided.
However, in the case where the hydrophilic coating film is formed on the surface of a PTFE porous body or the like having a thickness of 20 µm or less, when the hydrophilic polymer of the hydrophilic coating film dries and shrinks, the PTFE porous body succumbs to the strength of the coating film and shrinks. As a result, the porosity decreases and the flow rate of permeation decreases, which is a problem. On the other hand, in the case where a hydrophilic filtration membrane is produced by setting the thickness of a PTFE porous body to be large in advance and maintaining the thickness of a hydrophilic coating film to 20 µm or less, the large thickness increases resistance, and therefore, it is not possible to increase the flow rate, which is a problem. Consequently, there is also room for improvement in this respect.

### Citation List

### Patent Literature

PTL 1: Japanese Unexamined Patent Application Publication No. 2003-80590
PTL 2: Japanese Unexamined Patent Application Publication No. 7-316327

### Summary of Invention

### Technical Problem

The present invention has been achieved in view of the problems described above, and it is an object of the invention to provide a porous multilayer filter which can trap ultrafine particles of less than 0.1 µm at a high retention efficiency and in which a high flow rate can be achieved, and a method of manufacturing the same.

### Solution to Problem

In order to solve the problem, a first invention provides a porous multilayer filter including a support layer composed of a porous expanded PTFE sheet, and a filtration layer composed of a porous expanded PTFE sheet which is different from that of the support layer, wherein at least a liquid-to-be-treated inflow surface of the filtration layer is subjected to hydrophilization treatment, the filtration layer and the support layer are fusion-bonded to each other at a boundary therebetween to form a multilayer structure, pores of the support layer three-dimensionally communicate with pores of the filtration layer, and pores surrounded by a fibril skeleton of the filtration layer are smaller than pores of the support layer.

Furthermore, a second invention provides a porous multilayer filter including a support layer composed of a porous expanded PTFE sheet, and a filtration layer composed of a porous expanded PTFE sheet which is different from that of the support layer, wherein the filtration layer and the support layer are fusion-bonded to each other at a boundary therebetween to form a multilayer structure, pores of the support layer three-dimensionally communicate with pores of the filtration layer, pores surrounded by a fibril skeleton of the filtration layer are smaller than pores of the support layer, and the thickness of the filtration layer is smaller than the thickness of the support layer.

The difference between the first invention and the second invention is in that, in the first invention, at least a liquid-to-be-treated inflow surface of the filtration layer is subjected to hydrophilization treatment, while in the second invention, the surface is not subjected to the hydrophilization treatment and is hydrophobic.
The first invention and the second invention are different from each other in that, in the first invention, at least a liquid-to-be-treated inflow surface of the filtration layer is subjected to hydrophilization treatment, while in the second invention, the surface is not subjected to the hydrophilization treatment and is hydrophobic.
However, the first invention and the second invention have other characteristics in common, such as in the formation of a multilayer structure composed of the filtration layer and the support layer. In the hydrophilic case, as described above, shrinkage during drying poses a problem. In the case where hydrophilization treatment is not performed, there is a possibility that, when a high pressure is applied, the membrane may be damaged if the membrane is composed of the filtration layer alone. When the thickness of the filtration layer is increased in order to suppress the problems, it becomes difficult to increase the flow rate. In each of the first invention and the second invention, by using a common configuration, such as formation of a multilayer structure composed of the filtration layer and the support layer, it is possible to increase the flow rate while trapping ultrafine particles at a high retention efficiency.

In each of the porous multilayer filters of the first and second inventions, preferably, the thickness of the filtration layer is 2 to 10 µm, more preferably, is decreased to 3 to 5 µm, and the thickness of the support layer is 1.5 to 10 times, more preferably, 5 to 10 times, that of the filtration layer, i.e., 20 to 50 µm.
Furthermore, preferably, the mean pore size of the filtration layer is 0.01 to 0.45 µm, and the mean pore size of the support layer is 5 to 1000 times that of the filtration layer.
Furthermore, preferably, the porosity of the filtration layer is 40% to 90%, and the porosity of the support layer is 1 to 2.5 times that of the filtration layer.

When compared between the filter which is subjected to hydrophilization treatment according to the first invention and the filter which is not subjected to hydrophilization treatment and which is hydrophobic according to the second invention, in the filter of the second invention, the thickness of the filtration layer may be set smaller than that of the filter of the first invention within the range defined above.

In each of the porous multilayer filter of the first invention which is subjected to hydrophilization treatment and the porous multilayer filter of the second invention which is not subjected to hydrophilization treatment and which is hydrophobic, the filtration layer is made to have a filtration function, and the support layer is made to have a function of supporting the filtration layer. Thus, the functions are divided between the filtration layer and the support layer, and the size of pores of the support layer is increased so that treatment can be performed at a high flow rate.
Consequently, even if the thickness of the filtration layer is decreased in order to increase the flow rate, with a mean pore size that can trap ultrafine particles of less than 0.1 µm, the entire filter can be imparted with stiffness and can be reinforced, and also elongation and shrinkage of the thin filtration layer can be suppressed. Therefore, when hydrophilization treatment is performed in the first invention, it is possible to prevent shrinkage during drying after the hydrophilization treatment. As a result, filtration treatment can be performed at a high flow rate without decreasing the flow rate of permeation while making it possible to trap particles of 0.01 µm, which is less than 0.1 µm.

As described above, in the filter according to the present invention (hereinafter, the configuration and function common to the first invention and the second invention will be referred to as the present invention), since the filtration layer is integrated with the support layer, the filtration layer can be formed as a thin film so that the flow rate can be increased.
Specifically, provided that the rate of change in flow rate is expressed by (flow rate before drying of hydrophilic coating film - flow rate after drying)/flow rate before drying, the rate of change in flow rate is 0.3 to 0.8 in the absence of a support layer, and can be suppressed to a range of 0 to 0.1 in the presence of a support layer. Thus, it is possible to make the most of the effect of decreasing the thickness of the filtration layer, and by maintaining a balance between the bubble point and the flow rate, a high-performance filtration membrane can be produced.

Preferably, the porous expanded PTFE sheet used as the filtration layer is changed according to the size of target particles to be trapped, and the support layer to be integrated with the filtration layer to form a multilayer structure is used in common by setting the mean pore size in the range of 5 to 1000 times as described above, more preferably in the range of 10 to 30 times.
The mean pore size is measured with a pore diameter distribution measuring apparatus (Perm-Porometer manufactured by PUI Corp., U.S.A).
Furthermore, a porous expanded PTFE sheet of a filtration layer having a hydrophobic surface without being subjected to hydrophilization treatment may be replaced with the filtration layer subjected to hydrophilization treatment, and together with the support layer used in common, may be formed into a multilayer structure.

The porosity of the filtration layer is preferably 40% to 90% as described above.
The reason for this is that when the porosity is less than 40%, the flow rate may decrease excessively, and when the porosity exceeds 90%, the strength may decrease excessively.
The porosity is determined according to the method described in ASTM-D-792 or by calculation based on the volume and absolute specific gravity of the membrane. A higher porosity value indicates superior permeability.
Furthermore, in the filtration layer, the bubble point is set at 70 to 400 kPa.

In the present invention, particles of 0.01 µm or more and less than 0.08 µm are considered as a target to be trapped. In a conventional filter of this kind, the minimum particle size that can be trapped is 0.1 µm. In contrast, the present invention is configured so as to trap particles of less than 0.1 µm. Furthermore, in this case, the flow rate of permeation is set so as to achieve a high flow rate equivalent to the flow rate of permeation of the conventional filter which traps particles of 0.1 µm.

The particle retention efficiency is measured by the method described below.
A filter is punched to a circle with a diameter of 47 mm and set into a holder. An aqueous solution containing polystyrene latex particles (manufactured by JSR Corporation) having a particle diameter of 0.055 µm (1.4 x 1010 pieces/cm²) is prepared, and 32 cm³ of the aqueous solution is filtered using the film which has been set, at a pressure of 41.2 kPa. The absorbance is measured for the aqueous solution before filtration and the filtrate, and the ratio between the two is calculated. The absorbance is measured using an ultraviolet-visible spectrophotometer (manufactured by Shimadzu Corporation, UV-160) at a wavelength of 310 nm (measurement accuracy 1/100).

Fine particles of 0.08 µm or less are targeted to be trapped without decreasing the flow rate of permeation as described above. However, by changing the porous expanded PTFE sheet constituting the filtration layer, the filter can be used for trapping particles exceeding 0.08 µm, and in this case, the flow rate of permeation can be set so as to achieve a high flow rate compared with the conventional filter.

Furthermore, the present invention provides a method of manufacturing the first porous multilayer filter subjected to hydrophilization treatment.
The manufacturing method includes sintering the filtration layer and the support layer at a temperature equal to or higher than the melting point of PTFE to fusion-bond the filtration layer and the support layer to each other at the boundary therebetween, subsequently, impregnating the filtration layer and the support layer, which have been integrated, with a hydrophitic material, and then, insolubilizing the hydrophilic material by treatment with a crosslinking liquid.

Examples of the hydrophilic material used in the hydrophilization treatment include polyvinyl alcohol (PVA), ethylene-vinyl alcohol copolymers (EVOH), and acrylate resins. Above all, when a PTFE porous body is impregnated with an aqueous solution of PVA, PVA easily adsorbs to the surface of PTFE fibers and is easily uniformly applied to fibers, and thus PVA is suitably used.

The first invention and the second invention are the same up to the multilayer formation step before the hydrophilization treatment step. The filtration layer is formed with a thickness of 5 to 20 µm, which is larger than the final thickness. The filtration layer and the support layer each composed of PTFE with a melting point of 347°C are stacked and sintered at a temperature of 350°C to 410°C for 30 seconds to 10 minutes, thereby performing fusion bonding such that the total thickness is 20 to 50 µm.

In the first invention in which hydrophilization treatment is performed, subsequently, the integrated porous expanded PTFE sheets are impregnated with IPA and then impregnated with an aqueous solution of PVA with a certain concentration, and thereby, the PVA resin adheres to the surface of fibers of the porous expanded PTFE sheets. The porous expanded PTFE sheets having the PVA resin adhering to the surface of fibers thereof are treated with a crosslinking liquid to perform crosslinking, and thus the PVA resin is insolubilized. As described above, impregnation with the PVA resin solution is performed in a state in which the support layer is integrated with the filtration layer. Consequently, after crosslinking treatment with the crosslinking liquid, even if the PVA resin shrinks in the drying process, since the filtration layer composed of the porous expanded PTFE sheet is supported by the support layer and has strength, shrinkage of the filtration layer can be suppressed, and it is possible to prevent a decrease in the porosity of the filtration layer.

The porous expanded PTFE sheets of the filtration layer and the support layer constituting the porous multilayer filter of the present invention are produced by the method described below.
The method includes a step of forming sheets by subjecting a mixture of high-molecular-weight PTFE unsintered powder and a liquid lubricant to paste extrusion, a step of stretching the sheets to form porous films, and a step of sintering each stretched porous film.

Regarding the filtration layer, the stretch magnification in the longitudinal direction is 5 to 15 times, and preferably 8 to 12 times. The stretch magnification in the lateral direction is 10 to 100 times, and preferably 15 to 40 times.
When the stretch magnifications are smaller than the magnifications described above, the porosity decreases, lumps of resin remain, the shape of pores does not become spherical, and it is not possible to obtain sufficient permeability. On the other hand, when the stretch magnifications exceed the magnifications described above, there may be a possibility that fibers are torn, leading to large pores.
In order to equalize the fiber length in the longitudinal direction with the fiber length in the lateral direction and in order to obtain a spherical pore shape, the ratio between longitudinal stretching and lateral stretching is preferably set to 1:2 to 1:5, and more preferably 1:2 to 1:3.

Meanwhile, regarding the support layer, the stretch magnification in the longitudinal direction is 4 to 15 times, and preferably 5 to 10 times. The stretch magnification in the lateral direction is 0 to 15 times, and preferably 2 to 5 times.
When the stretch magnifications are smaller than the magnifications described above, the porosity decreases. When the stretch magnifications exceed the magnifications described above, fibers are torn.
When the stretch magnification in the lateral direction is excessively low, the porosity decreases. However, in the case where a sufficient flow rate can be secured even by unidirectional stretching with respect to the support layer, stretching in the lateral direction is not always necessary. Furthermore, when the stretch magnifications exceed the stretch magnifications described above, residual stress increases, and the support function becomes insufficient.

As described above, by using high-molecular-weight PTFE unsintered powder compared with the conventional case and by increasing the stretch magnifications in the biaxial directions, i.e., in the longitudinal and lateral directions, of the shaped body, it is possible to obtain a porous filter in which the filtration layer has high permeability while having fine pores.
The reason for this is that, when high-molecular-weight PTFE unsintered powder is used, even if stretching is performed in the biaxial directions, i.e., in the longitudinal and lateral directions, at higher magnifications than those in the conventional case, while preventing a pore from excessively expanding or the film from being torn, fiber formation is allowed to proceed to a high degree, resulting in substantial disappearance of nodes which are PTFE lumps, and it is possible to fabricate a porous filter in which fine pores with fine fibers constituting the skeleton are densely disposed.
On the other hand, the support layer reinforces the filtration layer, and the thickness and flow rate/permeability are important factors for the support layer. Therefore, the longitudinal and lateral total stretch magnification is set lower than that of the filtration layer, and it is designed so as not to increase residual stress while maintaining the thickness.

As the high-molecular-weight PTFE unsintered powder for forming the filtration layer, specifically, powder having a number-average molecular weight of 4 million or higher is preferably used. More preferably, the number-average molecular weight is 12 million or higher. This corresponds to the particularly high grade of molecular weight among currently commercially available PTFE unsintered powder.
The number-average molecular weight is determined from the specific gravity of the shaped article. However, the PTFE molecular weight largely varies depending on the measurement method, which makes it difficult to perform accurate measurement. Therefore, depending on the measurement method, the range described above may not be satisfied.
The support layer can be formed with a wide range.

Furthermore, in the filtration layer, the stretch magnification in terms of area ratio is preferably 150 times or more, more preferably 300 times or more, and most preferably 600 times or more, In addition, the upper limit of the stretch magnification (area ratio) is preferably 1500 times or less.
When the stretch magnification in terms of area ratio is less than 150 times, fiber formation cannot be allowed to proceed to a high degree. On the other hand, when the stretch magnification exceeds 1500 times, the film becomes too thin, resulting in a decrease in strength.
In the support layer, the stretch magnification is 8 times or more, and more preferably 15 times or more.
The upper limit of the stretch magnification (area ratio) is preferably 60 times or less.
When the stretch magnification in terms of area ratio is less than 8 times, fiber formation cannot be allowed to proceed to a high degree. On the other hand, when the stretch magnification exceeds 60 times, residual stress becomes too strong, and the function of the support film is decreased.

Specific steps in the method of manufacturing a porous multilayer filter according to the present invention will be described below.
In the first step, a shaped body is produced by paste extrusion of known PTFE unsintered powder. In the paste extrusion process, usually, 10 to 40 parts by mass, preferably 16 to 25 parts by mass, of a liquid lubricant is mixed to 100 parts by mass of a PTFE resin, and extrusion is performed.

As the liquid lubricant, various lubricants which have been conventionally used in the paste extrusion process can be used. Examples thereof include petroleum solvents, such as solvent naphtha and white oil; hydrocarbon oil, such as undecane; aromatic hydrocarbons, such as triol and xylol; alcohols; ketones; esters; silicone oil; fluorochlorocarbon oil; solutions obtained by dissolving a polymer, such as polyisobutylene or polyisoprene, in these solvents; mixtures containing at least two of these; and water or aqueous solutions containing a surfactant. A single component is preferable to a mixture because uniform mixing can be achieved.

Formation by paste extrusion is performed at a PTFE sintering temperature, i.e., 327°C or lower, and usually, at around room temperature. Prior to paste extrusion, preforming is usually carried out. In the preforming process, the mixture is subjected to compression molding, for example, at a pressure of about 1 to 10 MPa, into a shape of a block, rod, tube, or sheet.
The shaped body obtained by preforming is extruded with a paste extruder, rolled with calender rolls or the like, or extruded and then rolled. Thereby, a shaped body having a shape that can be stretched is produced.

Next, the liquid lubricant is removed from the shaped body. The liquid lubricant is removed before sintering. The liquid lubricant may be removed after stretching, but preferably removed before stretching.
The liquid lubricant is removed by heating, extraction, dissolution, or the like, and preferably by heating. In the case of heating, usually, the heating temperature is preferably 200°C to 330°C. In the case where a liquid lubricant having a relatively high boiling point, such as silicone oil or a fluorocarbon, is used, the liquid lubricant is preferably removed by extraction.

Furthermore, in addition to the liquid lubricant, other substances may also be incorporated.
For example, pigments for coloring may be added, and for the purpose of improving wear resistance, preventing low-temperature flow, and facilitating the formation of pores, and for other purposes, inorganic fillers, such as carbon black, graphite, silica powder, glass powder, glass fibers, silicates, and carbonates; metal powder, metal oxide powder, metal sulfide powder, and the like can be added. Furthermore, for the purpose of promoting the formation of a porous structure, substances that can be removed or decomposed by heating, extraction, dissolution, or the like, such as ammonium chloride, sodium chloride, and other plastics and rubbers, may be added in the form of a powder or solution.

In the subsequent step, the shaped bodies obtained by paste extrusion are separated into a shaped body constituting the support layer and a shaped body constituting the filtration layer, and each shaped body is stretched at the stretch magnification described above.
Stretching is preferably performed at a temperature that is lower than the melting point and as high as possible. The temperature is preferably room temperature (or 20°C) to 300°C, and more preferably 250°C to 280°C.
When stretching is performed at a low temperature, a porous membrane having a relatively large pore size and a high porosity is easily produced. When stretching is performed at a high temperature, a dense porous membrane having a small pore size is easily produced.
By combining these conditions, it is possible to control the pore size and the porosity. In the filtration layer, since a dense porous membrane having a small pore size is desired, a relatively high stretching temperature is preferably used.
In the stretching process, after first stage stretching is performed at a low temperature of 20°C to 70°C, second stage stretching may be performed under the high temperature condition as described above.

Furthermore, in order to prevent shrinkage of the stretched sheet, preferably heat setting is performed. In the present invention, since the stretch magnification is particularly increased, heat setting is important in order not to lose the porous structure. Heat setting is preferably performed immediately after the stretching in the lateral direction is performed. In the case where stretching is performed in two or more stages, heat setting is preferably performed after stretching in each stage.
Heat setting is usually performed under tension, for example, with both ends of the stretched film fixed, at an atmospheric temperature of 200°C to 500°C while retaining for I to 20 minutes.

Next, the stretched sheets are integrated. The integration process is performed at a sintering temperature of 327°C, which is the transition point of PTFE, or higher by heating for about several minutes to several tens of minutes, or for a longer period than that depending on circumstances. Usually, it is appropriate to perform heating in a furnace maintained at 350°C to 500°C.

The resulting porous expanded PTFE sheets of the filtration layer and the support layer of the present invention each have the thickness described above.
The filter of the first invention is then subjected to the hydrophilization treatment described above, while the filter of the second invention is not subjected to the laydrophilization treatment.

### Advantageous Effects of Invention

As is obvious from the above description, a porous multilayer filter of the present invention includes a filtration layer and a support layer, each composed of a porous expanded PTFE sheet, pores of the support layer are larger than pores of the filtration layer, the porous expanded PTFE sheets of the filtration layer and the support layer are heated at a temperature equal to or higher than the melting point of PTFE and fusion-bonded to each other at an interface boundary therebetween, a filtration function is imparted to only the filtration layer the thickness of which is decreased, the filtration layer is supported by the support layer, and the size of pores of the support layer is increased, thereby increasing permeability.
Consequently, ultrafine particles of about 0.05 µm can be passed through the filter at a flow rate of permeation equivalent to that of a filter for trapping particles of 0.1 µm.

Moreover, since the support layer is integrated with the filtration layer to retain the strength of the filtration layer, in the case where hydrophilization treatment is performed, shrinkage does not occur in the filtration layer during drying of the hydrophilic coating film, and the porosity can be maintained. In such a manner, in the filter of the present invention, while being capable of trapping ultrafine particles, stable permeability can be secured and permeation can be performed at a high flow rate.
Therefore, the filters can be suitably used as gas/liquid filters for microfiltration used in manufacturing processes in the semiconductor and liquid crystal fields and food/medicine field, in which higher retention efficiency of ultrafine particles and a high treatment rate are required.

### Brief Description of Drawings

[Fig. 1] Figure 1 is a schematic cross-sectional view of a porous multilayer filter according to a first embodiment of the present invention.
[Fig. 2] Figures 2(A) is a photograph, magnified 3000 times, of a filtration layer, and Fig. 2(B) is a photograph, magnified 3000 times, of a support layer.
[Fig. 3] Figure 3 is a graph showing the experiment results in examples of the first embodiment.
[Fig. 4] Figure 4 is a schematic cross-sectional view of a porous multilayer filter according to a second embodiment of the present invention.
[Fig. 5] Figure 5 is a graph showing the experiments results in examples of the second embodiment.

### Description of Embodiments

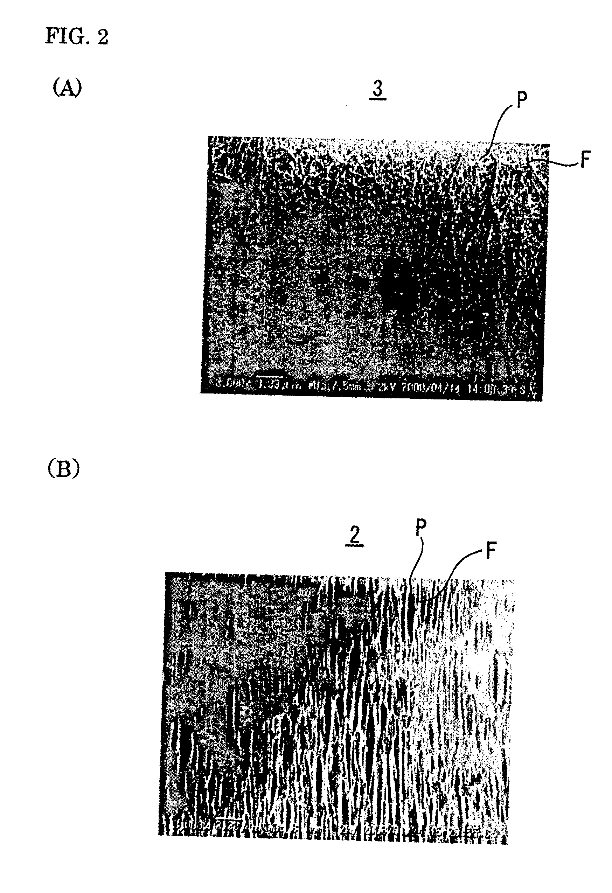

The present invention will be described below with reference to the drawings.

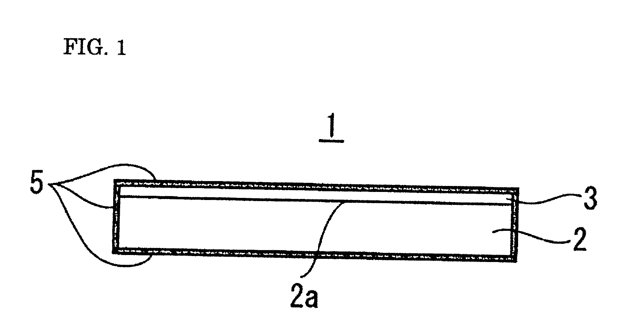

Figures 1 to 3 show a porous multilayer filter according to a first embodiment.
As shown in the schematic cross-sectional view of Fig. 1 and the enlarged schematic cross-sectional views of Fig. 2, a porous multilayer filter 1 is made of a filtration membrane having a two-layer structure in which a support layer 2 composed of a stretched porous PTFE sheet and a filtration layer 3 composed of a stretched porous PTFE sheet provided on a peripheral surface of the support layer 2 are stacked and integrated. Furthermore, the filtration layer 3 and the support layer 2 are subjected to hydrophilization treatment with a hydrophilic material composed of PVA 5, and PVA 5 is applied by coating at a uniform thickness of 0.03 to 0.05 µm on fiber surfaces of the filtration layer 3 and the support layer 2.

In this embodiment, the thickness of the support layer 2 is 5 to 10 times that of the filtration layer 3. The thickness of the filtration layer 3 is 2 to 10 µm.

The filtration layer 3 has a structure shown in the photograph, which is magnified 3000 times, of Fig. 2(A), and the support layer 2 has a structure shown in the photograph, which is magnified 3000 times, of Fig. 2(B).
Each of the filtration layer 3 and the support layer 2 has a fibril skeleton in which flexible fibers F are linked together by nodes to form a three-dimensional network. The fibril skeleton surrounds substantially slit-shaped pores P, and the pores P three-dimensionally communicate with each other.

In this embodiment, the filtration layer 3 has a mean pore size of 0.03 to 0.05 µm and a porosity of 70% to 80%.
In the filtration layer 3, the bubble point is set by adjusting the mean pore size and the porosity within the ranges described above depending on solid particles to be trapped.

Specifically, the filtration layer 3 is configured to be used for trapping ultrafine particles of 0.01 µm or more and less than 0.08 µm, the bubble point is set at 200 to 400 kPa, the water flow rate is 70 to 300 sec/100 ml, the pressure drop is 29.4 kPa, and the effective area is 9.6 cm².

When solid particles exceeding 0.1 to 0.5 µm are trapped, the bubble point of the filtration layer 3 is set at 50 kPa or more and less than 150 kPa, and the water flow rate is set at 30 sec/100 ml or less.
When solid particles of 0.08 to 0.1 µm are trapped, the bubble point of the filtration layer 3 is set at 150 kPa or more and less than 200 kPa, and the water flow rate is set at 40 sec/100 ml or less.
In such a manner, a plurality of filtration layers 3 with bubble points varying according to the size of solid particles to be trapped are provided, and the filtration layers are integrated with the common support layer 2 to form a multilayer structure for use.

In the porous expanded PTFE sheet constituting the support layer 2, with respect to the pore size at an outer surface 2a which is the contact surface with the filtration layer 3, the IPA bubble point is 2 to 30 kPa, the porosity is 75% to 90%, and the IPA permeability coefficient is 40 to 100 ml/min/cm² at a pressure drop of 93.1 kPa. Furthermore, the matrix tensile strength is 50 to 110 MPa.

These physical properties are measured by the methods described below.
(1) Porosity: According to ASTM-D-792, calculated from specific gravity measured in water (apparent specific gravity) and specific gravity of tetrafluoroethylene resin. A higher value indicates superior permeability.
(2) Mean pore size: Measured with a Perm-Porometer manufactured by PMI Corp. (model number CFP-1200A).
(3) Bubble point: Measured by a method according to ASTM-F-316-80, using isoprapyl alcohol.
(4) Flow rate:
   Sheet: Regarding the sheet of the filtration layer, measured by the method of ASTM-F-317, with a pressure drop of 29.4 kPa.
   Matrix tensile strength: According to JIS K 7161, calculated on the basis of the expression below, using the value measured at a tensile strain rate of 100 mm/min, with a distance between gauge marks of 50 mm, during testing.
   Matrix tensile strength = tensile strength/(1 - porosity (%)/100)

A method of manufacturing a porous multilayer filter including a support layer 2 and a filtration layer 3 according to the first embodiment will be described below.

In a first step, porous expanded PTFE sheets constituting the support layer 2 and the filtration layer 3 are produced separately.

In each of them, 16 to 25 parts by mass of a liquid lubricant is added to 100 parts by mass of PTFE unsintered powder (fine polymer), and mixing is performed.
As the PTFE unsintered powder, high-molecular-weight powder having a number-average molecular weight of one million to 15 million is used.
As the liquid lubricant, a petroleum solvent, such as solvent naphtha or white oil, is used.

Next, the resulting mixture is subjected to compression molding using a compression molding machine to form a block-like shaped body (preforming). The block-like shaped body is extruded into a sheet-like shape at room temperature to 50°C, at a rate of 20 mm/min.
Then, the resulting sheet-like shaped body is rolled with calender rolls or the like to produce a sheet-like shaped body with a thickness of 300 µm.

In the next step, in order to remove the liquid lubricant from the sheet-like shaped body, the sheet-like shaped body is dried by being passed through heating rolls at a roll temperature of 130°C to 220°C.

Next, the sheet-like shaped body thus obtained is biaxially stretched in the longitudinal and lateral directions.
In the stretching process, the stretch magnification of the sheet-like shaped body constituting the support layer 2 is set different from that of the sheet-like shaped body for the main body of the filtration layer 3 as described above.
In this embodiment, in each of the support layer 2 and the filtration layer 3, longitudinal stretching is carried out first and is followed by lateral stretching.
The lateral stretching is performed inside a furnace in a high-temperature atmosphere of 70°C to 200°C, and after stretching, heat setting is performed by retaining the shaped body at 280°C to 390°C for 0.25 to 1 minute.

Next, the filtration layer 3 is stacked on one surface of the stretched porous PTFE sheet constituting the support layer 2, and heating is performed for 0.5 to 3 minutes at 360°C to 400°C, which is equal to or higher than the melting point of PTFE.
Thereby, the support layer 2 and the filtration layer 3 are fusion-bonded to each other at an interface boundary therebetween to form an integrated structure, and a porous multilayer filter is produced.

The integrated porous expanded PTFE sheets of the filtration layer 3 and the support layer 2 obtained in the step described above are subjected to hydrophilization treatment with PVA.
In the hydrophilization treatment, the stacked and integrated porous expanded PTFE sheets are immersed in isopropyl alcohol (IPA) for 0.25 to 2 minutes, and then each are impregnated with an aqueous solution of PVA with a concentration of 0.5% to 0.8% by weight for 5 to 10 minutes. Then, after immersion in pure water for 2 to 5 minutes, crosslinking is performed.
The crosslinking is performed by any method selected from glutaraldehyde crosslinking (GA), terephthalaldehyde crosslinking (TPA) and electron beam crosslinking in which electron beam irradiation is performed at 6 Mrad.
After the crosslinking is performed, the stacked and integrated porous expanded PTFE sheets are washed with pure water and then dried at normal temperature to 80°C to produce stacked and integrated hydrophilic PTFE porous membranes.

A porous multilayer filter 1 manufactured as described above has, as shown in Fig. 1, multilayers including a support layer 2 composed of a porous expanded PTFE sheet and a filtration layer 3 composed of a porous expanded PTFE sheet integrated onto a peripheral surface of the support layer 2, in which the outer surfaces of the filtration layer 3 and the support layer 2 and the surface of internal fibers are subjected to hydrophilization treatment with PVA.

Pores of the supporting layer 2 and pores of the filtration layer 3 shown in Figs. 2(A) and 2(B) three-dimensionally communicate with each other, and in the filtration layer 3, pores in the outer surface communicate with pores of PVA 5 constituting the hydrophilic coating layer.
In the porous multilayer filter 1, for example, a liquid to be treated is supplied from the outer surface of the filtration layer 3 toward the inner peripheral surface side of the supporting layer 2 to perform solid-liquid separation treatment.

### EXAMPLES OF FIRST EMBODIMENT

First to fifth porous multilayer filters including filtration layers 3 having varying bubble points were fabricated as examples.

### (EXAMPLE 1)

With respect to a main body of a filtration layer, 18 parts by mass of a liquid lubricant (Supersol FP-25 manufactured by Idemitsu Kosan Co., Ltd. (constituent: naphtha)) was added and mixed to 100 parts by mass of PTFE fine powder (PTFE 601A manufactured by DuPont). The resulting mixture was subjected to compression molding in a molding machine to form a block-like shaped body.
Next, the block-like shaped body was continuously extruded into a sheet-like shape. The sheet-like shaped body was passed through pressure rolls, further passed through heating rolls (130°C to 220°C) in order to remove the liquid lubricant, and wound up on a roll to obtain a sheet of 300 µm.

Next, with respect to a sheet for the main body of the filtration layer, after stretching at a magnification of 2 times in the longitudinal direction (machine direction) at a roll temperature of 250°C to 280°C, stretching is further performed at a magnification of 4 times under the same temperature condition. That is, longitudinal stretching was performed in two stages at a stretch magnification of 8 times.
Both ends in the width direction of the longitudinally stretched film were held with a chuck, and lateral stretching was performed in a direction perpendicular to the machine direction in an atmosphere of 50°C at a stretch magnification of 5 times. Then, the laterally stretched film was directly subjected to heat setting by being retained at 285°C for 0.25 to 1 minute. Subsequently, stretching was performed in an atmosphere of 170°C at a stretch magnification of 18 times. Then, the film was directly subjected to heat setting by being retained at 340°C for 0.25 to 1 minute. That is, lateral stretching was performed in two stages at a stretch magnification of 90 times.
The stretched sheet was passed through a heating furnace of 360°C to perform sintering for 1.5 minutes. Thereby, a main body of the filtration layer of Example I was obtained. In the main body of the filtration layer of Example 1, the bubble point was 350 kPa, and the size of target particles to be trapped was 0.03 µm.

Meanwhile, a sheet for the support layer 2 was formed under a temperature condition of 180°C to 200°C, at a longitudinal stretch magnification of 7.4 times, and at a lateral stretch magnification of 10 times. The pore size of the support layer 2 was 6 times that of the filtration layer 3, and the thickness of the support layer was 30 µm.

The porous expanded PTFE sheets for the filtration layer 3 and the support layer 2 were stacked, and by heating at 370°C for 100 seconds, the filtration layer 3 and the support layer 2 were fusion-bonded to each other at a boundary therebetween to form an integrated body.

Subsequently, the composite membrane including the filtration layer 3 and the support layer 2 which were integrated was subjected to hydrophilization treatment with PVA by the method described above.

### (EXAMPLE 2)

In the filtration layer 3, the amount of addition of the liquid lubricant was changed to 20 parts by mass relative to the resin 601A (manufactured by DuPont). The longitudinal stretch magnification was set at 8 times, and the lateral stretch magnification was set at 30 times. The bubble point of the filtration layer 3 was set at 250 kPa, and the size of target particles to be trapped was set at 0.05 µm. Otherwise, the structure was the same as that of Example 1.

### (EXAMPLE 3)

The resin of the filtration layer 3 was changed to CD123 (manufactured by Asahi Glass Co., Ltd.), and the amount of addition of the liquid lubricant was changed to 20 parts by mass. The longitudinal and lateral stretch magnifications were changed. The longitudinal stretch magnification was set at 6 times, and the lateral stretch magnification was set at 15 times. The bubble point of the filtration layer 3 was set at 200 kPa, and the size of target particles to be trapped was set at 0.1 µm. Otherwise, the structure was the same as that of Example 1.

### (EXAMPLE 4)

The resin of the filtration layer 3 was changed to CD123 (manufactured by Asahi Glass Co., Ltd.), and the amount of addition of the liquid lubricant was changed to 22 parts by mass. The longitudinal and lateral stretch magnifications for the main body of the filtration layer were changed. The longitudinal stretch magnification was set at 5 times, and the lateral stretch magnification was set at 10 times. The bubble point of the filtration layer 3 was set at 150 kPa, and the size of target particles to be trapped was set at 0.2 µm. Otherwise, the structure was the same as that of Example 1.

### (EXAMPLE 5)

The resin of the filtration layer 3 was changed to CD145 (manufactured by Asahi Glass Co., Ltd.), and the amount of addition of the liquid lubricant was changed to 22 parts by mass. The longitudinal and lateral stretch magnifications were changed. The longitudinal stretch magnification was set at 5 times, and the lateral stretch magnification was set at 10 times. The bubble point of the filtration layer 3 was set at 100 kPa, and the size of target particles to be trapped was set at 0.45 µm. Otherwise, the structure was the same as that of Example 1.

### (COMPARATIVE EXAMPLES 1-1 to 1-3)

In each of Comparative Examples 1-1 to 1-3, a filter composed of a one-layer porous expanded PTFE sheet was fabricated. In Comparative Example 1-1, the bubble point was set at 200 kPa, and the size of target particles to be trapped was set at 0.1 µm. In Comparative Example 1-2, the bubble point was set at 150 kPa, and the size of target particles to be trapped was set at 0.2 µm. In Comparative Example 1-3, the bubble point was set at 100 kPa, and the size of target particles to be trapped was set at 0.45 µm. The filter of Comparative Example 1 corresponds to a filter described in Japanese Unexamined Patent Application Publication No. 2008-119662 which is the prior application of the present applicant.

In Comparative Example 1 (1-1 to 1-3), 18 parts by mass of a liquid lubricant (Supersol FP-25 manufactured by Idemitsu Kosan Co., Ltd. (constituent: naphtha)) was added to 100 parts by mass of PTFE fine powder (trade name CD123 manufactured by Asahi Glass Co., Ltd., molecular weight 12 million), followed by mixing. The resulting mixture was subjected to compression molding in a molding machine to form a block-like shaped body.
Next, the block-like shaped body was continuously extruded into a sheet-like shape. The sheet-like shaped body was passed through pressure rolls, further passed through heating rolls (130°C to 220°C), and wound up on a roll to obtain a sheet of 300 µm in which the liquid lubricant had been removed.
Next, stretching was performed at a roll temperature of 250°C to 280°C in the longitudinal direction (machine direction) at a stretch magnification of 6 times.
Next, both ends in the width direction of the film were held with a chuck, and stretching was performed in a direction perpendicular to the machine direction in an atmosphere of 150°C at a stretch magnification of 4 times.
The sheet was passed through a heating furnace of 360°C to perform sintering for 2 minutes. Thereby, a filter of Comparative Example 1 (1-1 to 1-3) was obtained.

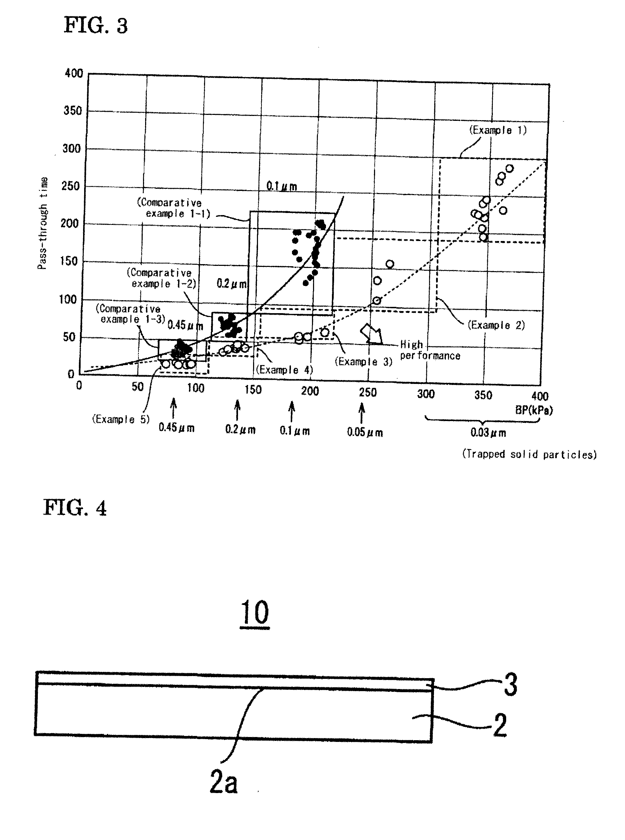

A liquid to be treated (100 ml) was passed through each of Examples 1 to 5 and Comparative Example 1 under an applied pressure of 29.4 KPa, and the pass-through time (s) was measured.
The results thereof are shown in the graph of Fig. 3. In Fig. 3, open circles indicate Examples 1 to 5, and filled circles indicate Comparative Example 1.

As is evident from the graph of Fig. 3, when particles of 0.03 µm were trapped at a bubble point of 350 kPa in Example 1, the pass-through time (time required for passing 100 ml of water) was equivalent to that of Comparative Example 1-1. Thus, particles of 0.03 µm can be trapped at the same water flow rate as that of the filter of Comparative Example 1 for trapping particles of 0.1 µm.
Furthermore, when particles of 0.05 µm were trapped at a bubble point of 250 kPa in Example 2, it was possible to shorten the pass-through time compared with the case where particles of 0.1 µm were trapped in Comparative Example 1-1. Thus, treatment was possible at a high flow rate and permeability was increased.
In Example 3 in which the bubble point was set at 200 kPa and which was configured to trap particles of 0.1 µm as in Comparative Example 1-1, the pass-through time decreased to about one quarter, and permeation was possible at a significantly high flow rate.
In Examples 4 and 5, compared with Comparative Examples 1-2 and 1-3 having trapping performance equivalent thereto, it was possible to decrease the pass-through time, and permeation was possible at a high flow rate.

As described above, it has been confirmed that in the porous multilayer filter of Example 1 of the first embodiment of the present invention, particles of 0.03 µm, which cannot be trapped by the filters of Comparative Examples 1 and 2, can be trapped, and high-speed treatment is possible at a flow rate equivalent to that of the filter for trapping 0.1 µm of Comparative Example 1. It has also been confirmed that, in the case where the bubble point is set to be the same as that of the Comparative Example 1 and 2, the pass-through time can be decreased, and the flow rate can be increased.
That is, while the filter of the present invention is a filter for microfiltration capable to trapping ultrafine particles, the flow rate of permeation is not decreased, and excellent permeability is exhibited.

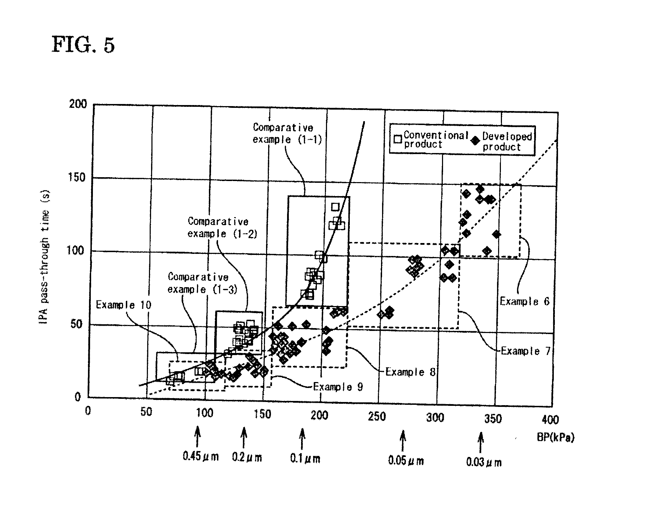

Figures 4 and 5 show a second embodiment.
A porous multilayer filter 10 according to the second embodiment differs from the first embodiment shown in Fig. 1 in that no hydrophilization treatment is performed, and as a result, the hydrophilic films composed of PVA 5 are not formed on the fiber surfaces of the filtration layer 3 and the support layer 2.

In the second embodiment, the thickness of the support layer 2 is 5 to 10 times that of the filtration layer 3, and in particular, preferably smaller at about 5 to 7 times. Consequently, the thickness of the filtration layer 3 is 2 to 10 µm, and particularly preferably 2 to 5 µm.

The structures of the filtration layer 3 and the support layer 2 are substantially the same as those shown in Figs. 2(A) and 2(B), which are photographs magnified 3000 times, of the first embodiment. Each of the filtration layer 3 and the support layer 2 has a fibril skeleton in which flexible fibers F are linked together by nodes to form a three-dimensional network. The fibril skeleton surrounds substantially slit-shaped pores P, and the pores P three-dimensionally communicate with each other.

In the second embodiment, as in the first embodiment, the filtration layer 3 has a mean pore size of 0.03 to 0.05 µm and a porosity of 70% to 80%.
In the filtration layer 3, the bubble point is set by adjusting the mean pore size and the porosity within the ranges described above depending on solid particles to be trapped.
In addition, in comparison with the first embodiment, the mean pore size is preferably 0.04 to 0.05 µm in the range of 0.03 to 0.05 µm, and the porosity is preferably 75% to 80% in the range of 70% to 80%.

Specifically, the filtration layer 3 is configured to be used for trapping ultrafine particles of 0.01 µm or more and less than 0.08 µm, the bubble point is set at 200 to 400 kPa, the IPA flow rate is 70 to 300 sec/100 ml, the pressure drop is 93.1 kPa, and the effective area is 9.6 cm².

When solid particles exceeding 0.1 to 0.5 µm are trapped, the bubble point of the filtration layer 3 is set at 50 kPa or more and less than 150 kPa, and the IPA flow rate is set at 30 sec/100 ml or less.
When solid particles of 0.08 to 0.1 µm are trapped, the bubble point of the filtration layer 3 is set at 150 kPa or more and less than 200 kPa, and the IPA flow rate is set at 40 sec/100 ml or less.
As in the first embodiment, a plurality of filtration layers 3 with bubble points varying according to the size of solid particles to be trapped are provided, and the filtration layers are integrated with the common support layer 2 to form a multilayer structure for use.

Furthermore, as in the first embodiment, in the porous expanded PTFE sheet constituting the support layer 2, with respect to the pore size at an outer surface 2a which is the contact surface with the filtration layer 3, the IPA bubble point is 2 to 30 kPa, the porosity is 75% to 90%, and the IPA permeability coefficient is 40 to 100 ml/min/cm² at a pressure drop of 93.1 kPa. Furthermore, the matrix tensile strength is 50 to 110 MPa.

The manufacturing of the porous multilayer filter 10 composed of the support layer 2 and the filtration layer 3 according to the second embodiment is different from that of the first embodiment in that hydrophilization treatment is not performed. The other steps are the same as those of the first embodiment. That is, in a first step, porous expanded PTFE sheets constituting the support layer 2 and the filtration layer 3 are produced separately.
The details are the same as those of the first embodiment, and in each of the support layer 2 and the filtration layer 3, 16 to 25 parts by mass of a liquid lubricant is added to 100 parts by mass of PTFE unsintered powder (fine polymer), and mixing is performed. The resulting mixture is subjected to compression molding using a compression molding machine to form a block-like shaped body (preforming). The block-like shaped body is extruded into a sheet-like shape at room temperature to 50°C, at a rate of 20 mm/min. The resulting sheet-like shaped body is rolled with calender rolls or the like to produce a sheet-like shaped body with a thickness of 300 µm.
In the next step, in order to remove the liquid lubricant from the sheet-like shaped body, the sheet-like shaped body is dried by being passed through heating rolls at a roll temperature of 130°C to 220°C.

Next, the sheet-like shaped body thus obtained is biaxially stretched in the longitudinal and lateral directions. The stretch magnification of the sheet-like shaped body constituting the support layer 2 is set different from that of the sheet-like shaped body for the main body of the filtration layer 3 as in the first embodiment. After stretching, the filtration layer 3 is stacked on one surface of the stretched porous PTFE sheet constituting the support layer 2, and heating is performed for 0.5 to 3 minutes at 360°C to 400°C, which is equal to or higher than the melting point of PTFE.
Thereby, the support layer 2 and the filtration layer 3 are fusion-bonded to each other at an interface boundary therebetween to form an integrated structure, and a porous multilayer filter 10 is produced. That is, the hydrophilization treatment which is performed after the support layer 2 and the filtration layer are stacked and integrated in the first embodiment is not performed.

### EXAMPLES OF SECOND EMBODIMENT

Examples 6 to 10 of the second embodiment are different from Examples 1 to 5 of the first embodiment subjected to hydrophilization treatment only in that hydrophilization treatment is not performed. Since the other requirements, such as the materials, manufacturing method, thickness, mean pore size, porosity, and bubble point, are the same as those of the first embodiment, a detailed description thereof will be omitted.
In Examples 6 to 10, the bubble point and the size of target particles to be trapped are as follows.
In Example 6, the bubble point of the filtration layer was set at 350 kPa, and the size of target particles to be trapped was set at 0.03 µm.
In Example 7, the bubble point of the filtration layer 3 was set at 250 kPa, and the size of target particles to be trapped was set at 0.05 µm.
In Example 8, the bubble point of the filtration layer 3 was set at 200 kPa, and the size of target particles to be trapped was set at 0.1 µm.
In Example 9, the bubble point of the filtration layer 3 was set at 150 kPa, and the size of target particles to be trapped was set at 0.2 µm.
In Example 10, the bubble point of the filtration layer 3 was set at 100 kPa, and the size of target particles to be trapped was set at 0.45 µm.

A liquid to be treated (100 ml) was passed through each of the filters of Examples 6 to 10 of the second embodiment and Comparative Examples 1-1,1-2, and 1-3 under an applied pressure of 93.1 KPa, and the pass-through time (s) of IPA was measured. That is, in the case of filters of the first embodiment subjected to hydrophilization treatment, the liquid to be treated was pressed at 29.4 KPa, while in the case of the hydrophobic filters of the second embodiment not subjected to hydrophilization treatment, the liquid to be treated was passed through the filter under an applied pressure of 93.1 KPa, which is about three times as that of the first embodiment.
The results thereof are shown in the graph of Fig. 5. In Fig. 5, open circles indicate Examples 6 to 10, and filled circles indicate Comparative Examples.

As shown in Fig. 5, when particles of 0.03 µm were trapped at a bubble point of 350 kPa in Example 6, the IPA pass-through time (time required for passing 100 ml of IPA) was 100 to 150 (s), which was equivalent to that of Comparative Example 1-1 in which the target to be trapped was 0.1 µm and the bubble point was 200 to 220 kPa. Thus, when compared with conventional examples, particles of 0.03 µm can be trapped at the same IPA flow rate as that of the filter of Comparative Example 1 for trapping particles of 0.1 µm.

When particles of 0.05 µm were trapped at a bubble point of 250 kPa in Example 7, the IPA pass-through time was 60 to 110 (s), which was equivalent to that of Comparative Example 1-1 in which the target to be trapped was 0.1 µm and the bubble point was 200 kPa.

When particles of 0.1 µm were trapped at a bubble point of 200 kPa in Example 8, the IPA pass-through time was 25 to 60 (s), which was equivalent to that of Comparative Example 1-2 in which the target to be trapped was 0.2 µm and the bubble point was 150 kPa.

When particles of 0.2 µm were trapped at a bubble point of 150 kPa in Example 9, the IPA pass-through time was 10 to 30 (s), and thus the pass-through time was decreased, which was equivalent to the pass-through time of Comparative Example 1-3 in which the target to be trapped was 0.45 µm and the bubble point was 100 kPa.

When particles of 0.45 µm were trapped at a bubble point of 100 kPa in Example 10, the IPA pass-through time was 7 to 25 (s), and the IPA pass-through time was about half of that of Comparative Example 1-3 which had the same target.

As described above, it has been confirmed that in the porous multilayer filters of Examples 6 to 10 of the second embodiment of the present invention, particles of 0.03 µm, which cannot be trapped by the filters of Comparative Examples 1 and 2, can be trapped, and high-speed treatment is possible at an IPA flow rate equivalent to that of the filter for trapping 0.1 µm of Comparative Example 1. It has also been confirmed that, in the case where the bubble point is set to be the same as that of the Comparative Example 1 and 2, the pass-through time can be decreased, and the flow rate can be increased.

As described above, in the filter which is subjected to hydrophilization treatment according to the first invention of the present invention, and even in the filter which is not subjected to hydrophilization treatment and which is hydrophobic according to the second invention, the filter can be a filter for microfiltration capable of trapping ultrafine particles, in which the flow rate of permeation is not decreased, and excellent permeability is exhibited.

### Reference Signs List

- 1: POROUS MULTILAYER FILTER
- 2: SUPPORT LAYER
- 3: FILTRATION LAYER

## Claims

1. A porous multilayer filter comprising:
a support layer composed of a porous expanded PTFE sheet; and
a filtration layer composed of a porous expanded PTFE sheet which is different from that of the support layer,
wherein at least a liquid-to-be-treated inflow surface of the filtration layer is subjected to hydrophilization treatment;
the filtration layer and the support layer are fusion-bonded to each other at a boundary therebetween to form a multilayer structure;
pores of the support layer three-dimensionally communicate with pores of the filtration layer; and
pores surrounded by a fibril skeleton of the filtration layer are smaller than pores of the support layer.

2. The porous multilayer filter according to Claim 1, wherein, in the hydrophilization treatment, a crosslinked PVA resin is immobilized on the surface of fibers of the filtration layer and the support layer.

3. A porous multilayer filter comprising:
a support layer composed of a porous expanded PTFE sheet; and
a filtration layer composed of a porous expanded PTFE sheet which is different from that of the support layer,
wherein the filtration layer and the support layer are fusion-bonded to each other at a boundary therebetween to form a multilayer structure;
pores of the support layer three-dimensionally communicate with pores of the filtration layer; and
pores surrounded by a fibril skeleton of the filtration layer are smaller than pores of the support layer.

4. The porous multilayer filter according to any one of Claims 1 to 3, wherein the thickness of the filtration layer is 2 to 10 µm, the thickness of the support layer is I to 30 times that of the filtration layer, the mean pore size of the filtration layer is 0.01 to 0.45 µm, the mean pore size of the support layer is 5 to 1000 times that of the filtration layer, the porosity of the filtration layer is 40% to 90%, and the porosity of the support layer is I to 2.5 times that of the filtration layer.

5. The porous multilayer filter according to any one of Claims 1 to 4, wherein the filtration layer has a bubble point of 70 to 400 kPa.

6. A method of manufacturing the porous multilayer filter according to Claim I, the method comprising:
sintering the filtration layer and the support layer at a temperature equal to or higher than the melting point of PTFE to fusion-bond the filtration layer and the support layer to each other at the boundary therebetween;
subsequently, impregnating the filtration layer and the support layer, which have been integrated, with a hydrophilic material; and
then, insolubilizing the hydrophilic material by treatment with a crosslinking liquid.
